# EUROPEAN PATENT APPLICATION

(11) **EP 4 628 538 A1**
(43) Date of publication of application: **08.10.2025**
(21) Application number: 23897654.2
(22) Date of filing: 22.11.2023
(51) Int. Cl.: C08L 67/04, C08K 5/103

(54) **RESIN COMPOSITION AND MOLDED BODY**

(30) Priority: 28.11.2022 JP 2022188867
(71) Applicant: Kaneka Corporation, Osaka-shi, Osaka 530-8288 (JP)
(72) Inventor: KATSUTA, Yuta, Osaka 566-0072 (JP); FURUI, Takanori, Osaka 566-0072 (JP); TANAKA, Shigeru, Osaka 566-0072 (JP)
(74) Representative: Vossius & Partner Patentanwälte Rechtsanwälte mbB
(86) International application number: PCT/JP2023/042079
(87) International publication number: WO 2024/117006

(57) **Abstract**

A resin composition contains a poly(3-hydroxyalkanoate) copolymer (A) and a lubricant (B). The lubricant (B) contains at least one compound selected from the group consisting of a diester compound composed of a dihydric alcohol and two molecules of a monocarboxylic acid and a triester compound composed of a trihydric alcohol and three molecules of a monocarboxylic acid. The monocarboxylic acid includes a carboxylic acid having 15 or more carbon atoms. The monocarboxylic acid may include montanic acid. The dihydric alcohol and the trihydric alcohol may have 2 to 6 carbon atoms.

## Description

### Technical Field

The present invention relates to a resin composition and a molded article that contain a poly(3-hydroxyalkanoate) resin.

### Background Art

Poly(3-hydroxyalkanoate) resins are thermoplastic polyesters produced and accumulated as energy storage substances in the cells of many kinds of microorganisms. These resins are drawing attention as materials that are biodegradable in seawater as well as in soil.

Investigations have been made to form various molded articles using such poly(3-hydroxyalkanoate) resins. For example, Patent Literature 1 discloses producing a sheet by calender molding using a poly(3-hydroxyalkanoate) resin.

A known way of imparting lubricity to a molded article of a poly(3-hydroxyalkanoate) resin is to add a fatty acid amide such as behenamide or erucamide as a lubricant (see Patent Literature 2, for example). The addition of the lubricant makes it possible, for example, to prevent the molten resin from sticking to calender rolls during calender molding and ensure easy separation of the formed sheet from the rolls.

### Citation List

### Patent Literature

PTL 1: Japanese Laid-Open Patent Application Publication No. 2022-128070
PTL 2: Japanese Laid-Open Patent Application Publication No. 2021-102669

### Summary of Invention

### Technical Problem

It is sometimes the case that a sheet made with a poly(3-hydroxyalkanoate) resin is subjected to a secondary molding process in which the sheet is formed into a given shape by means of a mold. In this case, the surface of the sheet is often coated with a mold release agent (such as a silicone mold release agent) beforehand to ensure that the sheet easily separates itself from the mold after the molding. However, conventional sheets made with a poly(3-hydroxyalkanoate) resin can repel mold release agents, and uniform coating of such a conventional sheet with a mold release agent is difficult.

Likewise, when the surface of a sheet made with a poly(3-hydroxyalkanoate) resin is subjected to printing, the sheet surface can repel the printing ink. Also in this regard, there is a need for improvement.

The present inventors have studied the above issues and discovered that a sheet made with a poly(3-hydroxyalkanoate) resin repels mold release agents or inks owing to the influence of behenamide and/or erucamide contained as a lubricant in the sheet.

One possible approach to improving the coatability of the sheet with mold release agents or the printability of the sheet may be not to add such a lubricant. However, in this case, the sheet lacks sufficient lubricity which would be achieved by the addition of a lubricant and cannot, for example, easily separate itself from rolls during calender molding.

In view of the above circumstances, the present invention aims to provide a poly(3-hydroxyalkanoate) resin-containing composition having lubricity and formable into a molded article the surface of which can be uniformly coated with mold release agents or successfully subjected to printing.

### Solution to Problem

As a result of intensive studies with the goal of solving the above problem, the present inventors have found that blending a poly(3-hydroxyalkanoate) copolymer with a compound having a particular structure can ensure lubricity comparable to or higher than that achieved by the addition of a conventional lubricant such as behenamide or erucamide and that the surface of a molded article of the blend can be uniformly coated with mold release agents or successfully subjected to printing. Based on this finding, the inventors have completed the present invention.

Specifically, the present invention relates to a resin composition containing a poly(3-hydroxyalkanoate) copolymer (A) and a lubricant (B), wherein the lubricant (B) contains at least one compound selected from the group consisting of a diester compound composed of a dihydric alcohol and two molecules of a monocarboxylic acid and a triester compound composed of a trihydric alcohol and three molecules of a monocarboxylic acid, and the monocarboxylic acid includes a carboxylic acid having 15 or more carbon atoms.

The present invention also relates to a molded article containing the resin composition.

### Advantageous Effects of Invention

The present invention can provide a poly(3-hydroxyalkanoate) resin-containing composition having lubricity and formable into a molded article the surface of which can be uniformly coated with mold release agents or successfully subjected to printing.

The resin composition according to the present invention has lubricity and can be easily separated from a machine part, such as a roll used in melt molding, which contacts the resin composition in a molten state.

In addition, the surface of a molded article made with the resin composition according to the present invention can be uniformly coated with mold release agents and has good printability.

Furthermore, the molded article made with the resin composition according to the present invention can advantageously have on its surface a vapor-deposited layer containing an inorganic material since such a vapor-deposited layer can adhere well to the surface of the molded article.

### Description of Embodiments

Hereinafter, an embodiment of the present invention will be described. The present invention is not limited to the embodiment described below.

The present embodiment relates to a resin composition containing a poly(3-hydroxyalkanoate) copolymer (A) and a lubricant (B).

### (Poly(3-Hydroxyalkanoate) Copolymer (A))

The resin composition contains a poly(3-hydroxyalkanoate) copolymer (A) as a constituent resin. The copolymer (A) is a copolymer having at least one type or two or more types of 3-hydroxyalkanoate units.

The 3-hydroxyalkanoate units are preferably represented by the following formula (1).

[-CHR-CH₂-CO-O-] (1)

In the formula (1), R is an alkyl group represented by CₚH₂ₚ₊₁, and p is an integer from 1 to 15. Examples of R include linear or branched alkyl groups such as methyl, ethyl, propyl, methylpropyl, butyl, isobutyl, t-butyl, pentyl, and hexyl groups. The integer p is preferably from 1 to 10 and more preferably from 1 to 8.

The poly(3-hydroxyalkanoate) copolymer is particularly preferably a microbially produced poly(3-hydroxyalkanoate) copolymer. In the microbially produced poly(3-hydroxyalkanoate) copolymer, all of the 3-hydroxyalkanoate units are contained as (R)-3-hydroxyalkanoate units.

The poly(3-hydroxyalkanoate) copolymer preferably contains 50 mol% or more, more preferably 60 mol% or more, even more preferably 70 mol% or more, of 3-hydroxyalkanoate units (in particular, the units represented by the formula (1)) in the total structural units (monomer units). The poly(3-hydroxyalkanoate) copolymer may contain only two or more types of 3-hydroxyalkanoate units as polymer structural units or may contain other units (e.g., 4-hydroxyalkanoate units) in addition to one type or two or more types of 3-hydroxyalkanoate units.

The poly(3-hydroxyalkanoate) copolymer is preferably a copolymer containing 3-hydroxybutyrate (hereinafter also referred to as "3HB") units and other hydroxyalkanoate units. Preferably, all of the 3-hydroxybutyrate units are (R)-3-hydroxybutyrate units.

The other hydroxyalkanoate units may be 3-hydroxyalkanoate units other than 3HB units or may be hydroxyalkanoate units (e.g., 4-hydroxyalkanoate units) other than 3-hydroxyalkanoate units. The other hydroxyalkanoate units may include only one type of hydroxyalkanoate units or may include two or more types of hydroxyalkanoate units.

Specific examples of the poly(3-hydroxyalkanoate) copolymer include poly(3-hydroxybutyrate-co-3-hydroxypropionate), poly(3-hydroxybutyrate-co-3-hydroxyvalerate) abbreviated as "P3HB3HV", poly(3-hydroxybutyrate-co-3-hydroxyvalerate-3-hydroxyhexanoate), poly(3-hydroxybutyrate-co-3-hydroxyhexanoate) abbreviated as "P3HB3HH", poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) abbreviated as "P3HB4HB". In particular, in terms of factors such as the resin composition productivity and the mechanical properties of the resin composition, poly(3-hydroxybutyrate-co-3-hydroxyhexanoate) or poly(3-hydroxybutyrate-co-4-hydroxybutyrate) is preferred, and poly(3-hydroxybutyrate-co-3-hydroxyhexanoate) is particularly preferred.

In terms of the resin composition productivity and the mechanical properties of the resin composition, the poly(3-hydroxyalkanoate) copolymer may include at least two types of poly(3-hydroxyalkanoate) copolymers differing in crystallinity. Specifically, the poly(3-hydroxyalkanoate) copolymer may include at least two types of poly(3-hydroxyalkanoate) copolymers differing in the types and/or proportions of the constituent monomers.

For example, the poly(3-hydroxyalkanoate) copolymer may include: a copolymer (A1) which is a copolymer of 3-hydroxybutyrate units and other hydroxyalkanoate units and in which the proportion of the other hydroxyalkanoate units is from 1 to 5 mol%; and a copolymer (A2) which is a copolymer of 3-hydroxybutyrate units and other hydroxyalkanoate units and in which the proportion of the other hydroxyalkanoate units is 24 mol% or more. For example, the poly(3-hydroxyalkanoate) copolymer preferably further includes, in addition to the copolymers (A1) and (A2), a copolymer (A3) which is a copolymer of 3-hydroxybutyrate units and other hydroxyalkanoate units and in which the proportion of the other hydroxyalkanoate units is from 6 to less than 24 mol%.

The average content ratio between 3-hydroxybutyrate units and other hydroxyalkanoate units (3-hydroxybutyrate units/other hydroxyalkanoate units) in the total monomer units constituting the total poly(3-hydroxyalkanoate) copolymer contained in the resin composition according to the present embodiment is preferably from 96/4 to 80/20 (mol%/mol%), more preferably from 95/5 to 81/19 (mol%/mol%), even more preferably from 94/6 to 82/18 (mol%/mol%), and still even more preferably from 93/7 to 82/18 (mol%/mol%) in terms of ensuring both the strength of the resin composition and the resin composition productivity.

The average content ratio between different monomer units in the total monomer units constituting the total poly(3-hydroxyalkanoate) copolymer can be determined by a method known to those skilled in the art, such as a method described in paragraph [0047] of WO 2013/147139. The average content ratio refers to a molar ratio between different monomer units in the total monomer units constituting the total poly(3-hydroxyalkanoate) copolymer.

The weight-average molecular weight of the poly(3-hydroxyalkanoate) copolymer is not limited to a particular range. In terms of ensuring both the strength of the resin composition and the resin composition productivity, the weight-average molecular weight is preferably from 10 × 10⁴ to 200 × 10⁴, more preferably from 25 × 10⁴ to 150 × 10⁴, and even more preferably from 30 × 10⁴ to 100 × 10⁴.

The weight-average molecular weight of the poly(3-hydroxyalkanoate) copolymer can be measured as a polystyrene-equivalent molecular weight by gel permeation chromatography (HPLC GPC system manufactured by Shimadzu Corporation) using a chloroform solution of the copolymer. The columns used in the gel permeation chromatography may be any columns suitable for weight-average molecular weight measurement.

The method for producing the poly(3-hydroxyalkanoate) copolymer is not limited to a particular technique, and may be a production method using chemical synthesis or a microbial production method. A microbial production method is preferred. The microbial production method used can be any known method. Known examples of bacteria that produce copolymers of 3-hydroxybutyrate with other hydroxyalkanoates include *Aeromonas caviae* which is a P3HB3HV- and P3HB3HH-producing bacterium and *Alcaligenes eutrophus* which is a P3HB4HB-producing bacterium. In particular, in order to increase the P3HB3HH productivity, *Alcaligenes eutrophus* AC32 (FERM BP-6038; see T. Fukui, Y. Doi, J. Bacteriol., 179, pp. 4821-4830 (1997)) incorporating a P3HA synthase gene is more preferred. Such a microorganism is cultured under suitable conditions to allow the microorganism to accumulate P3HB3HH in its cells, and the microbial cells accumulating P3HB3HH are used. Instead of the above microorganisms, a genetically modified microorganism incorporating any suitable poly(3-hydroxyalkanoate) resin synthesis-related gene may be used depending on the poly(3-hydroxyalkanoate) resin to be produced. The culture conditions including the type of the culture substrate may be optimized depending on the poly(3-hydroxyalkanoate) resin to be produced.

The resin composition according to the present embodiment contains a lubricant (B) containing an ester compound having a particular structure.

The lubricant (B) contains a diester compound composed of a dihydric alcohol and two molecules of a monocarboxylic acid or a triester compound composed of a trihydric alcohol and three molecules of a monocarboxylic acid. The monocarboxylic acid includes at least a carboxylic acid having 15 or more carbon atoms. Blending the poly(3-hydroxyalkanoate) copolymer (A) with the lubricant (B) imparts lubricity to the poly(3-hydroxyalkanoate) copolymer (A) and allows the resulting resin composition to be formed into a molded article the surface of which can be uniformly coated with mold release agents or successfully subjected to printing.

Two or more such diester compounds as defined above or two or more such triester compounds as defined above may be used in combination in the lubricant (B). Alternatively, the diester compound or the triester compound may be used alone, or the diester compound and the triester compound may be used in combination.

The diester compound is superior to the triester compound in the ability to impart lubricity. For this reason, the lubricant (B) preferably contains at least the diester compound.

The dihydric alcohol which is a component of the diester compound refers to an organic compound having two hydroxy groups, and the trihydric alcohol which is a component of the triester compound refers to an organic compound having three hydroxy groups.

The alcohols are not limited to having a particular number of carbon atoms. The number of carbon atoms in each alcohol may be, for example, from about 2 to 18 and is preferably from 2 to 12, more preferably from 2 to 6, and particularly preferably from 2 to 4. The number of carbon atoms in the trihydric alcohol is at least 3.

Specific examples of the dihydric alcohol include ethylene glycol, propylene glycol, butylene glycol, and pentylene glycol. Specific examples of the trihydric alcohol include glycerin.

The carboxylic acid which is a component of the diester or triester compound is a monocarboxylic acid, namely, an organic compound having one carboxy group. The carboxylic acid may be an aliphatic carboxylic acid or an aromatic carboxylic acid but is preferably an aliphatic carboxylic acid. The aliphatic carboxylic acid may be a saturated fatty acid or an unsaturated fatty acid but is preferably a saturated fatty acid. The saturated fatty acid is preferably a fatty acid having a linear carbon chain.

The carboxylic acid includes a carboxylic acid having 15 or more carbon atoms. The use of the ester compound containing such a carboxylic acid having a relatively long carbon chain can achieve the ability to impart lubricity to the poly(3-hydroxyalkanoate) copolymer (A). The number of carbon atoms is preferably 16 or more, more preferably 18 or more, even more preferably 20 or more, still even more preferably 22 or more, particularly preferably 24 or more, and most preferably 25 or more. The upper limit of the number of carbon atoms is not limited to a particular value. For example, the number of carbon atoms may be 40 or less or may be 30 or less.

Specific examples of the carboxylic acid having 15 or more carbon atoms include pentadecylic acid (15 carbon atoms), palmitic acid (16 carbon atoms), stearic acid (18 carbon atoms), arachidic acid (20 carbon atoms), behenic acid (22 carbon atoms), lignoceric acid (24 carbon atoms), and montanic acid (28 carbon atoms). Among these, montanic acid is preferred since it has an especially high ability to impart lubricity.

The carboxylic acid which is a component of the diester or triester compound may consist only of the above-described carboxylic acid having 15 or more carbon atoms or may include a carboxylic acid having 14 or less carbon atoms in addition to the carboxylic acid having 15 or more carbon atoms. Examples of the carboxylic acid having 14 or less carbon atoms include formic acid, acetic acid, propionic acid, butyric acid, valeric acid, caproic acid, caprylic acid, capric acid, lauric acid, and myristic acid.

To achieve an especially high ability to impart lubricity, the monocarboxylic acid which is a component of the diester or triester compound preferably consists only of the carboxylic acid having 15 or more carbon atoms.

Specific examples of the diester compound include ethylene glycol dimontanate and butylene glycol dimontanate.

Specific examples of the triester compound include glycerin tristearate and glycerin trimontanate.

The lubricant (B) may consist only of the diester compound and/or the triester compound or may be a partially saponified product of these ester compounds. That is, the lubricant (B) may contain a salt of the monocarboxylic acid having 15 or more carbon atoms in addition to the diester compound and/or the triester compound.

The salt is preferably an alkali metal salt or an alkaline-earth metal salt, and specific examples include a potassium salt, a sodium salt, and a calcium salt.

To achieve an especially high ability to impart lubricity, the lubricant (B) preferably consists only of the diester compound and/or the triester compound.

The amount of the lubricant (B) can be chosen as appropriate in view of the impartation of lubricity, the coatability with mold release agents, ant the printability. Preferably, the amount of the lubricant (B) is from 0.01 to 2 parts by weight per 100 parts by weight of the poly(3-hydroxyalkanoate) copolymer (A).

In terms of further improving the lubricity by the blending with the lubricant (B), the amount of the lubricant (B) is preferably at least 0.05 parts by weight, more preferably at least 0.1 parts by weight, even more preferably at least 0.2 parts by weight, still even more preferably at least 0.3 parts by weight, and particularly preferably at least 0.4 parts by weight.

In terms of minimizing the influence of the lubricant (B) on the appearance of the resulting molded article, the amount of the lubricant (B) is preferably up to 1.5 parts by weight, more preferably up to 1 part by weight, even more preferably up to 0.8 parts by weight, and particularly preferably up to 0.6 parts by weight.

The resin composition according to the present embodiment may contain an additional resin other than poly(3-hydroxyalkanoate) copolymers to the extent that the additional resin does not diminish the effect of the invention. Examples of the additional resin include: aliphatic polyester resins such as polybutylene succinate adipate, polybutylene succinate, polycaprolactone, and polylactic acid; and aliphatic-aromatic polyester resins such as polybutylene adipate terephthalate, polybutylene sebacate terephthalate, and polybutylene azelate terephthalate. The resin composition may contain only one additional resin or two or more additional resins.

The amount of the additional resin is not limited to a particular range but preferably 30 parts by weight or less, more preferably 20 parts by weight or less, even more preferably 15 parts by weight or less, and still even more preferably 10 parts by weight or less per 100 parts by weight of the total amount of the poly(3-hydroxyalkanoate) copolymer (A). The lower limit of the amount of the additional resin is not limited to a particular value, and the amount of the additional resin may be 0 part by weight or more.

The resin composition according to the present embodiment may contain additives usable with the poly(3-hydroxyalkanoate) copolymer (A) to the extent that the additives do not diminish the effect of the invention. Examples of the additives include a nucleating agent, a filler, a plasticizer, a colorant such as a pigment or dye, an odor absorber such as activated carbon or zeolite, a flavor such as vanillin or dextrin, an oxidation inhibitor, an antioxidant, a weathering resistance improver, an ultraviolet absorber, a mold release agent, a water-repellent agent, an antimicrobial agent, and a slidability improver. The resin composition may contain only one additive or may contain two or more additives. The amount of the additive(s) can be set by those skilled in the art as appropriate depending on the intended purpose.

Examples of the nucleating agent include pentaerythritol, orotic acid, aspartame, cyanuric acid, glycine, zinc phenylphosphonate, and boron nitride. Among these, pentaerythritol is preferred since it is particularly superior in the accelerating effect on crystallization of the poly(3-hydroxyalkanoate) copolymer (A).

When a nucleating agent is used, the amount of the nucleating agent used is preferably from 0.1 to 5 parts by weight, more preferably from 0.5 to 3 parts by weight, and even more preferably from 0.7 to 1.5 parts by weight per 100 parts by weight of the total amount of the poly(3-hydroxyalkanoate) copolymer (A). One nucleating agent may be used alone, or two or more nucleating agents may be used. The proportions of the nucleating agents used can be adjusted as appropriate depending on the intended purpose.

The filler may be an inorganic filler, an organic filler, or a combination of both. Examples of the inorganic filler include, but are not limited to, silicate salts, carbonate salts, sulfate salts, phosphate salts, oxides, hydroxides, nitrides, and carbon black. One filler may be used alone, or two or more fillers may be used in combination. The filler used preferably includes at least one filler selected from the group consisting of talc, silica, mica, kaolinite, montmorillonite, and smectite.

When the resin composition contains a filler, the amount of the filler contained is preferably from 0.01 to 20 parts by weight, more preferably from 0.1 to 10 parts by weight, and even more preferably from 0.5 to 5 parts by weight per 100 parts by weight of the total amount of the poly(3-hydroxyalkanoate) copolymer (A).

The plasticizer is not limited to a particular type of compound. In terms of the compatibility with the poly(3-hydroxyalkanoate) copolymer (A), an ester compound having an ester bond in the molecule is preferably used as the plasticizer.

Examples of ester compounds that can be used as the plasticizer include modified glycerin compounds, dibasic ester compounds, adipic ester compounds, polyether ester compounds, benzoic ester compounds, citric ester compounds, isosorbide ester compounds, and polycaprolactone compounds. Among these, modified glycerin ester compounds, dibasic ester compounds, adipic ester compounds, polyether ester compounds, and isosorbide ester compounds are preferred. One of the ester compounds as mentioned above may be used alone, or two or more thereof may be used in combination. When two or more ester compounds are used in combination, the mix proportions of the ester compounds can be adjusted as appropriate.

Preferred examples of the modified glycerin compounds include glycerin ester compounds. Glycerin ester compounds that can be used include monoesters, diesters, and triesters of glycerin. In terms of the compatibility with the poly(3-hydroxyalkanoate) copolymer (A), triesters of glycerin are preferred. It should be noted that compounds that can be classified as the lubricant (B) are excluded from the candidates for the plasticizer. Among the triesters of glycerin, glycerin diacetomonoesters are particularly preferred. Specific examples of the glycerin diacetomonoesters include glycerin diacetomonolaurate, glycerin diacetomonocaprylate, and glycerin diacetomonodecanoate. Examples of the modified glycerin compounds include "RIKEMAL" PL series and "BIOCIZER" of Riken Vitamin Co., Ltd.

Specific examples of the dibasic ester compounds include dibutyl adipate, diisobutyl adipate, bis(2-ethylhexyl) adipate, diisononyl adipate, diisodecyl adipate, bis[2-(2-butoxyethoxy)ethyl] adipate, bis[2-(2-butoxyethoxy)ethyl] adipate, bis(2-ethylhexyl) azelate, dibutyl sebacate, bis(2-ethylhexyl) sebacate, diethyl succinate, and mixed dibasic ester compounds.

Examples of the adipic ester compounds include diethylhexyl adipate, dioctyl adipate, and diisononyl adipate.

Examples of the polyether ester compounds include polyethylene glycol dibenzoate, polyethylene glycol dicaprylate, and polyethylene glycol diisostearate.

When a plasticizer is used, the amount of the plasticizer added can be set as appropriate in view of the moldability or strength of the resin composition. The amount of the plasticizer is preferably from 0.1 to 10 parts by weight, more preferably from 1 to 8 parts by weight, and even more preferably from 3 to 6 parts by weight per 100 parts by weight of the total amount of the poly(3-hydroxyalkanoate) copolymer (A).

The resin composition according to the present embodiment can be formed into a molded article having a given shape by melting the resin composition through heating to a temperature equal to or higher than the melting point of the resin composition and then molding the molten resin composition into the given shape.

The molding method to be used is not limited to a particular technique, and any commonly used molding method can be employed. Specific examples include calender molding, blow molding, injection molding, extrusion molding, and blown film molding.

The calender molding is a method in which a film or sheet is obtained by kneading and rolling a molten resin composition between heat rolls and thus forming the resin composition into a sheet shape.

The blow molding is a molding method in which a hollow molded article such as a bottle can be produced by blowing air into a molten, plasticized resin material. Any blow molding technique can be used such as extrusion blow molding, multilayer extrusion blow molding, injection blow molding, or stretch blow molding.

The injection molding is a method in which a molded article is obtained by injecting a molten resin composition into a mold, cooling and solidifying the resin composition in the mold, and subsequently opening the mold to release the molded article from the mold. The injection molding technique used can be any injection molding technique commonly used for molding of thermoplastic resins. Other examples include gas-assisted injection molding and injection compression molding. In-mold injection molding, gas pressure injection molding, two-color molding, sandwich molding, push-pull injection molding, or SCORIM can also be used. The injection molding technique to be used is not limited to those mentioned above.

The extrusion molding is a method in which an elongate molded article is obtained by extruding a molten resin composition from a mold having a given shape. For example, when the mold used is a T-die, a film or sheet is obtained. When the mold used is a double-cylindrical mold, a tube or pipe is obtained.

The blown film molding is a method in which a tubular film is obtained by extruding a molten resin composition into a cylindrical shape and blowing air into the cylindrical resin composition to inflate it.

According to the present embodiment, in any of the various molding methods, the resin composition can be easily separated from a machine part which contacts the resin composition in a molten state, and a molded article can be obtained which has good coatability with mold release agents and good printability. Preferred examples of the molded article include a film, a sheet, an injection-molded article, and a blow-molded article. The blow-molded article may be, for example, an extrusion blow-molded article or an injection blow-molded article.

The thickness of the film or sheet is not limited to a particular range and may be, for example, from about 10 µm to about 1 mm. When the film or sheet is subjected to a secondary molding process as described below, the thickness of the film or sheet is preferably from about 0.1 to about 1 mm, more preferably from 0.15 to 0.8 mm, and even more preferably from 0.20 to 0.6 mm.

The film or sheet is not limited to a particular use but preferred for use in various fields such as agricultural industry, fishery industry, forestry industry, horticultural industry, medical industry, hygiene industry, food industry, apparel industry, non-apparel industry, packaging industry, automotive industry, building material industry, and other industries. To be more specific, for example, the film or sheet can be used as any of various products such as a mulch film for agriculture, a fumigation sheet for forestry, a banding tape including a flat yarn, a root wrapping film for garden plants, a back sheet of a diaper, a sheet for packaging, a shopping bag, a garbage bag, a draining bag, and a compost bag.

The blow-molded or injection-molded article is not limited to a particular use and can be used, for example, as any of various products such as a bottle for a beverage, liquid food, or liquid detergent, a container, a case, a toy product, a recreational product, a piece of tableware, a material for agriculture, a part of OA equipment, a part of a home electric appliance, a structural body part of a ship or an aircraft, a part of an automobile, a daily sundry good, and a stationery product.

The molded article made with the resin composition according to the present embodiment can advantageously have a printed layer on its surface since it has good printability. The printed layer is not limited to a particular type of layer and may be any layer containing a pigment or a dye. The ink used in the printing may be an oil-based ink or a water-based ink.

The molded article made with the resin composition according to the present embodiment can advantageously have a mold release agent layer on its surface since the surface can be uniformly coated with mold release agents. The term "mold release agent" refers, for example, to a chemical agent which is used when a molded article is subjected to a secondary molding process where the molded article is placed in a mold and formed into a given shape and with which the surface of the molded article is coated before the secondary molding process so that the molded article can be smoothly removed from the mold after the secondary molding process. The mold release agent applied to the surface of the molded article is dried as appropriate to form a coating layer, which can prevent the molded article from sticking to the mold.

Specific examples of the mold release agent include a silicone mold release agent, a wax mold release agent, and a fluorine mold release agent.

The method for applying the mold release agent is not limited to a particular technique and can be a known method. The thickness of the mold release agent layer formed is not limited to a particular range and can be set as appropriate by those skilled in the art.

The secondary molding process described above is also called thermoforming, in which a molded article such as a film or sheet is softened by heating and formed into a given shape by means of a mold. For example, the thermoforming using a sheet can give a container having a depressed portion. More specifically, the thermoforming can be accomplished by fixing the edges of the molded article such as a film or sheet with clamps or pins, heating and softening the molded article by means such as a far-infrared heater, and conforming the softened film to a mold under vacuum or pressure.

Specific examples of the thermoforming include vacuum forming, pressure forming, vacuum-pressure forming, matched mold forming, plug-assist forming, and TOM forming. Vacuum forming and pressure forming are preferred since they are simple and involve low mold costs.

The device used in the thermoforming to heat the molded article is not limited to a particular type of heater, and examples of the device include a far-infrared heater, a hot wire heater, and a hot air heater, among which the far-infrared heater is preferred since it can heat the molded article quickly and uniformly.

The molded article obtained by the thermoforming is not limited to a particular type of product, and examples of the molded article include a container having a depressed central portion, a container having a partition, a container having an opening around which there is a folded portion, a lid having a depressed or protruding central portion, and a lid provided with a curved or stepwise design along part or all of the periphery of the lid.

The surface of the molded article made with the resin composition according to the present embodiment can be uniformly coated with mold release agents. Thus, forming a mold release agent layer beforehand makes it easy to remove the molded article from the mold after the thermoforming.

The molded article made with the resin composition according to the present embodiment can advantageously have on its surface a vapor-deposited layer containing an inorganic material since such a vapor-deposited layer can adhere well to the molded article. The vapor-deposited layer may be any layer containing an inorganic material and may consist only of the inorganic material.

The inorganic material of the vapor-deposited layer is, for example but not limited to, a metal or an inorganic oxide. Examples of inorganic materials that are preferred for use include aluminum, aluminum oxide, silicon oxides (such as silicon monoxide, silicon dioxide, and silicon oxynitride), cerium oxide, calcium oxide, diamond-like carbon coating, and mixtures of any of these materials. In terms of the adhesion of the vapor-deposited layer, aluminum or silicon dioxide is particularly preferred for use.

The thickness of the vapor-deposited layer is not limited to a particular range. In terms of factors such as productivity, handleability, and appearance, the thickness of the vapor-deposited layer is preferably from 5 to 100 nm and more preferably from 5 to 60 nm. When the thickness of the vapor-deposited layer is in this range, the adhesion between the vapor-deposited layer and the molded article or the barrier performance of the vapor-deposited layer (the impermeability of the molded article to water vapor or oxygen) can be further improved.

The vapor-deposited layer may be formed on one side or both sides of the molded article. In terms of ensuring the biodegradability of the molded article, the vapor-deposited layer is preferably formed only on one side of the molded article. Preferably, the vapor-deposited layer is formed directly on the surface of the molded article without any other layer interposed between the vapor-deposited layer and the surface of the molded article.

The molded article having the vapor-deposited layer may be further laminated with a resin layer or the like. For example, when the molded article is subjected to heat sealing, a resin layer may be formed on the vapor-deposited layer.

The molded article having on its surface a vapor-deposited layer containing an inorganic material is preferred for use, for example, as paper, a film, a sheet, a tube, a plate, a rod, a container (such as a bottle), a bag, or a part. In terms of addressing marine pollution, the molded article is particularly preferred for use as a film or bottle.

Examples of the method for forming the vapor-deposited layer include vacuum deposition, sputtering, chemical vapor deposition, and ion plating.

In order to enhance the adhesion between the vapor-deposited layer and the molded article or the barrier performance of the molded article, the surface of the molded article is preferably subjected to corona treatment or plasma treatment before vapor deposition. The treatment intensity in the corona treatment is preferably from 5 to 80 W•min/m² and more preferably from 10 to 60 W•min/m². In terms of the enhancement of the adhesion of the vapor-deposited layer and the concomitant enhancement of the barrier performance, it is preferable, before formation of the vapor-deposited layer, to form a vapor-deposited nucleation metal layer under plasma discharge. In this case, the plasma discharge is preferably effected in an atmosphere containing a gas such as oxygen gas, nitrogen gas, or argon gas.

In the following items, preferred aspects of the present disclosure are listed. The present invention is not limited to the following items.

### [Item 1]

A resin composition containing a poly(3-hydroxyalkanoate) copolymer (A) and a lubricant (B), wherein
the lubricant (B) contains at least one compound selected from the group consisting of a diester compound composed of a dihydric alcohol and two molecules of a monocarboxylic acid and a triester compound composed of a trihydric alcohol and three molecules of a monocarboxylic acid, and
the monocarboxylic acid includes a carboxylic acid having 15 or more carbon atoms.

### [Item 2]

The resin composition according to item 1, wherein the monocarboxylic acid includes an aliphatic carboxylic acid.

### [Item 3]

The resin composition according to item 1 or 2, wherein the monocarboxylic acid includes a carboxylic acid having 25 or more carbon atoms.

### [Item 4]

The resin composition according to any one of items 1 to 3, wherein the monocarboxylic acid includes montanic acid.

### [Item 5]

The resin composition according to any one of items 1 to 4, wherein the dihydric alcohol and the trihydric alcohol have 2 to 6 carbon atoms.

### [Item 6]

The resin composition according to any one of items 1 to 5, wherein the lubricant (B) contains the diester compound.

### [Item 7]

The resin composition according to any one of items 1 to 6, wherein the lubricant (B) further contains a salt of a carboxylic acid having 15 or more carbon atoms.

### [Item 8]

The resin composition according to any one of items 1 to 7, wherein an amount of the lubricant (B) is from 0.01 to 2 parts by weight per 100 parts by weight of the poly(3-hydroxyalkanoate) copolymer (A).

### [Item 9]

The resin composition according to any one of items 1 to 8, wherein the poly(3-hydroxyalkanoate) copolymer (A) is a copolymer containing 3-hydroxybutyrate units and other hydroxyalkanoate units.

### [Item 10]

The resin composition according to item 9, wherein the other hydroxyalkanoate units are 3-hydroxyhexanoate units.

### [Item 11]

A molded article containing the resin composition according to any one of items 1 to 10.

### [Item 12]

The molded article according to item 11, wherein the molded article is a film or a sheet.

### [Item 13]

The molded article according to item 11, wherein the molded article is an extrusion blow-molded article or an injection blow-molded article.

### [Item 14]

The molded article according to any one of items 11 to 13, wherein the molded article has on a surface thereof a printed layer and/or a mold release agent layer.

### [Item 15]

The molded article according to any one of items 11 to 14, wherein the molded article has on a surface thereof a vapor-deposited layer containing an inorganic material.

### Examples

Hereinafter, the present invention will be described more specifically using Examples and Comparative Examples. The present invention is not limited by the examples in any respect.

### (Raw Materials)

PHBH (1'): Poly(3-hydroxybutyrate-co-3-hydroxyhexanoate) (P3HB3HH) obtained according to a method described in WO 2008/010296, having a 3-hydroxyhexanoate (3HH) content of 5.1 mol%, and having a standard polystyrene-equivalent weight-average molecular weight as measured by GPC of 76 × 10⁴
PHBH (1"): P3HB3HH obtained according to a method described in WO 2013/147139, having a 3HH content of 10.5 mol%, and having a standard polystyrene-equivalent weight-average molecular weight as measured by GPC of 58 × 10⁴
PHBH (2'): P3HB3HH obtained according to a method described in WO 2008/010296, having a 3HH content of 4.2 mol%, and having a standard polystyrene-equivalent weight-average molecular weight as measured by GPC of 57 × 10⁴
PHBH (3'): P3HB3HH obtained according to a method described in WO 2008/010296, having a 3HH content of 5.4 mol%, and having a standard polystyrene-equivalent weight-average molecular weight as measured by GPC of 66 × 10⁴

### (Blending of Raw Materials)

PHBH (1): Powder obtained by blending 70 parts by weight of PHBH (1'), 30 parts by weight of PHBH (1"), and 5 parts by weight of a filler
PHBH (2): Powder obtained by blending 70 parts by weight of PHBH (2'), 30 parts by weight of PHBH (1"), and 5 parts by weight of a filler
PHBH (3): Powder obtained by blending 60 parts by weight of PHBH (3'), 40 parts by weight of PHBH (1"), and 15 parts by weight of a filler

### Lubricants (B)

Ethylene glycol dimontanate
Mixture of butylene glycol dimontanate and calcium montanate
Glycerin tristearate

### Other Additives for Comparison

Erucamide
Pentaerythritol tetrastearate
Behenamide
Glycerin diacetate monolaurate
Filler: Talc (MICRO ACE K-1 manufactured by Nippon Talc Co., Ltd.)

### (Processing Method 1)

PHBH (1), PHBH (2), or PHBH (3) composed as shown in "Blending of Raw Materials" was introduced into an 8-inch-diameter × 20-inch-long roll machine (manufactured by Kansai Roll Co., Ltd.) heated at a set temperature of 145°C and was melted and kneaded for 3 minutes, and the kneaded material was rolled into a 32-cm-wide sheet. The sheet was cooled while being stretched at a stretch ratio of 1.0 to 1.5 in the MD direction. Thus, a resin sheet with a thickness of 0.5 to 0.6 mm was obtained. During this process, the ease of separation of the sheet from the rolls was evaluated as "separability from rolls". The "appearance" of the obtained sheet was also evaluated.

### (Method for Measuring Average Molecular Weight)

The weight-average molecular weight of each poly(3-hydroxyalkanoate) copolymer was measured as follows. First, the poly(3-hydroxyalkanoate) copolymer as a measurement object was dissolved in chloroform, and the solution was heated in a hot water bath at 60°C for 0.5 hours. The heated solution was filtered through a disposable filter made of PTFE and having a pore diameter of 0.45 µm, and the filtrate was then subjected to GPC analysis under the conditions listed below to determine the weight-average molecular weight.
GPC system: RI monitor (L-3000) manufactured by Hitachi, Ltd.
Columns: K-G (one column) and K-806L (two columns) manufactured by Showa Denko K.K.
Sample concentration: 3 mg/ml
Eluent: Chloroform solution
Eluent flow rate: 1.0 ml/min
Amount of injected sample: 100 µL
Analysis time: 30 minutes
Standard sample: Standard polystyrene

### (Evaluation Method)

### (Separability from Rolls)

When each of the sheets produced in Examples and Comparative Examples was separated from the rolls, the ease of separation was rated according to the following criteria.

Poor: The sheet cannot be separated from the rolls.

Average: The sheet gets caught by the rolls and is difficult to separate the sheet from the rolls.

Good: The sheet can be separated from the rolls without getting caught by the rolls.

Excellent: The sheet spontaneously separates itself from the rolls without any force applied.

### (Sheet Appearance)

The appearance of the surface of each of the sheets produced in Examples and Comparative Examples was visually inspected and rated according to the following criteria.

Good: The sheet surface has a good appearance.

Average: The sheet surface has blisters or holes.

### (Coatability with Mold Release Agents)

Each of the sheets produced in Examples and Comparative Examples was cut to give a 10 cm × 10 cm piece. An emulsion-type silicone mold release agent, KM-9782 (manufactured by Shin-Etsu Chemical Co., Ltd.), was diluted to 15 times, and 0.1 to 0.2 g of the diluted liquid was dropped and spread on the surface of the piece of sheet to examine whether the sheet surface was repellent to the mold release agent. Ratings were made according to the following criteria.

Good: The sheet surface does not repel the mold release agent.

Poor: The sheet surface repels the mold release agent.

### (Printability)

Using a water-based black brush pen, an ink was spread on the surface of each of the sheets produced in Examples and Comparative Examples to examine whether the sheet surface was repellent to the ink.

Good: The sheet surface does not repels the ink.

Poor: The sheet repels the ink.

### (Adhesion of Vapor-Deposited Layer)

A vapor-deposited layer (thickness = 100 nm) containing aluminum as an inorganic material was formed on the surface of each of the sheets produced in Examples and Comparative Examples.

The formation of the vapor-deposited layer was done on a 30 mm × 30 mm cut piece of the sheet by using a deposition system (UHSP-T2040H manufactured by Shimadzu Industrial Systems Co., Ltd.) in an argon gas atmosphere.

The obtained sheet having the vapor-deposited layer was subjected to a cross-cut test (JIS K 5600-6), and the adhesion of the vapor-deposited layer was rated based on the proportion (%) of the area over which the vapor-deposited layer peeled in the entire tested surface.

Good: The proportion of the area over which the vapor-deposited layer peeled is less than 25%.

Average: The proportion of the area over which the vapor-deposited layer peeled is from 25 to 75%

Poor: The proportion of the area over which the vapor-deposited layer peeled is more than 75%.

### <Example 1>

One hundred parts by weight of PHBH (2) and 0.05 parts by weight of ethylene glycol dimontanate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Example 2>

One hundred parts by weight of PHBH (2) and 0.07 parts by weight of ethylene glycol dimontanate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Example 3>

One hundred parts by weight of PHBH (2) and 0.1 parts by weight of ethylene glycol dimontanate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Example 4>

One hundred parts by weight of PHBH (3) and 0.1 parts by weight of ethylene glycol dimontanate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Example 5>

One hundred parts by weight of PHBH (3) and 0.3 parts by weight of ethylene glycol dimontanate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Example 6>

One hundred parts by weight of PHBH (1) and 0.1 parts by weight of ethylene glycol dimontanate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Example 7>

One hundred parts by weight of PHBH (1) and 0.3 parts by weight of ethylene glycol dimontanate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Example 8>

One hundred parts by weight of PHBH (1) and 0.5 parts by weight of ethylene glycol dimontanate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Example 9>

One hundred parts by weight of PHBH (3) and 0.5 parts by weight of ethylene glycol dimontanate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Example 10>

One hundred parts by weight of PHBH (1) and 1.0 parts by weight of ethylene glycol dimontanate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Example 11>

One hundred parts by weight of PHBH (1) and 0.1 parts by weight of a mixture of butylene glycol dimontanate and calcium montanate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Example 12>

One hundred parts by weight of PHBH (1) and 0.5 parts by weight of a mixture of butylene glycol dimontanate and calcium montanate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Example 13>

One hundred parts by weight of PHBH (1) and 1.0 parts by weight of a mixture of butylene glycol dimontanate and calcium montanate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Example 14>

One hundred parts by weight of PHBH (1) and 0.5 parts by weight of glycerin tristearate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Comparative Example 1>

One hundred parts by weight of PHBH (1) was added and processed by the method as described in "Processing Method 1" to obtain a sheet. The obtained sheet was evaluated for the separability from rolls, the sheet appearance, the coatability with mold release agents, and the printability. The results are shown in Table 1.

### <Comparative Example 2>

One hundred parts by weight of PHBH (3) was added and processed by the method as described in "Processing Method 1" to obtain a sheet. The obtained sheet was evaluated for the separability from rolls, the sheet appearance, the coatability with mold release agents, and the printability. The results are shown in Table 1.

### <Comparative Example 3>

One hundred parts by weight of PHBH (1) and 0.5 parts by weight of erucamide were added and processed by the method as described in "Processing Method 1" to obtain a sheet. The obtained sheet was evaluated for the separability from rolls, the sheet appearance, the coatability with mold release agents, and the printability. The results are shown in Table 1.

### <Comparative Example 4>

One hundred parts by weight of PHBH (3) and 0.5 parts by weight of erucamide were added and processed by the method as described in "Processing Method 1" to obtain a sheet. The obtained sheet was evaluated for the separability from rolls, the sheet appearance, the coatability with mold release agents, and the printability. The results are shown in Table 1.

### <Comparative Example 5>

One hundred parts by weight of PHBH (1) and 1.0 parts by weight of erucamide were added and processed by the method as described in "Processing Method 1" to obtain a sheet. The obtained sheet was evaluated for the separability from rolls, the sheet appearance, the coatability with mold release agents, and the printability. The results are shown in Table 1.

### <Comparative Example 6>

One hundred parts by weight of PHBH (1) and 0.5 parts by weight of pentaerythritol tetrastearate were added and processed by the method as described in "Processing Method 1" to obtain a sheet. The obtained sheet was evaluated for the separability from rolls, the sheet appearance, the coatability with mold release agents, and the printability. The results are shown in Table 1.

### <Comparative Example 7>

One hundred parts by weight of PHBH (1) and 0.5 parts by weight of behenamide were added and processed by the method as described in "Processing Method 1" to obtain a sheet. The obtained sheet was evaluated for the separability from rolls, the sheet appearance, the coatability with mold release agents, and the printability. The results are shown in Table 1.

### <Comparative Example 8>

One hundred parts by weight of PHBH (1) and 0.5 parts by weight of glycerin diacetate monolaurate were added and processed by the method as described in "Processing Method 1" to obtain a sheet. The obtained sheet was evaluated for the separability from rolls, the sheet appearance, the coatability with mold release agents, and the printability. The results are shown in Table 1.

**[Table 1]**

| | P3HA copolymer (A) | Lubricant (B) or another additive | | | Evaluation results | | | |
|---|---|---|---|---|---|---|---|---|
| | | Type | Maximum number of carbon atoms in fatty acid | Amount (parts by weight) | Separability from rolls | Sheet appearance | Coatability with mold release agents | Printability |
| Ex. 1 | PHBH (2) | Ethylene glycol dimontanate | 28 | 0.05 parts | Good | Good | Good | Good |
| Ex. 2 | PHBH (2) | Ethylene glycol dimontanate | 28 | 0.07 parts | Good | Good | Good | Good |
| Ex. 3 | PHBH (2) | Ethylene glycol dimontanate | 28 | 0.1 parts | Good | Good | Good | Good |
| Ex. 4 | PHBH (3) | Ethylene glycol dimontanate | 28 | 0.1 parts | Good | Good | Good | Good |
| Ex. 5 | PHBH (3) | Ethylene glycol dimontanate | 28 | 0.3 parts | Excellent | Good | Good | Good |
| Ex. 6 | PHBH (1) | Ethylene glycol dimontanate | 28 | 0.1 parts | Good | Good | Good | Good |
| Ex. 7 | PHBH (1) | Ethylene glycol dimontanate | 28 | 0.3 parts | Excellent | Good | Good | Good |
| Ex. 8 | PHBH (1) | Ethylene glycol dimontanate | 28 | 0.5 parts | Excellent | Good | Good | Good |
| Ex. 9 | PHBH (3) | Ethylene glycol dimontanate | 28 | 0.5 parts | Excellent | Good | Good | Good |
| Ex. 10 | PHBH (1) | Ethylene glycol dimontanate | 28 | 1.0 parts | Excellent | Average | Good | Good |
| Ex. 11 | PHBH (1) | Butylene glycol dimontanate + calcium montanate | 28 | 0.1 parts | Good | Good | Good | Good |
| Ex. 12 | PHBH (1) | Butylene glycol dimontanate + calcium montanate | 28 | 0.5 parts | Excellent | Good | Good | Good |
| Ex. 13 | PHBH (1) | Butylene glycol dimontanate + calcium montanate | 28 | 1.0 parts | Excellent | Average | Good | Good |
| Ex. 14 | PHBH (1) | Glycerin tristearate | 18 | 0.5 parts | Excellent | Good | Good | Good |
| Comp. 1 | PHBH (1) | - | - | - | Average | Good | Good | Good |
| Comp. 2 | PHBH (3) | - | - | - | Average | Good | Good | Good |
| Comp. 3 | PHBH (1) | Erucamide | 22 | 0.5 parts | Good | Good | Poor | Poor |
| Comp. 4 | PHBH (3) | Erucamide | 22 | 0.5 parts | Good | Good | Poor | Poor |
| Comp. 5 | PHBH (1) | Erucamide | 22 | 1.0 parts | Good | Good | Poor | Poor |
| Comp. 6 | PHBH (1) | Pentaerythritol tetrastearate | 18 | 0.5 parts | Good | Good | Poor | Poor |
| Comp. 7 | PHBH (1) | Behenamide | 22 | 0.5 parts | Average | Good | Poor | Poor |
| Comp. 8 | PHBH (1) | Glycerin diacetate monolaurate | 12 | 0.5 parts | Poor | Good | Good | Good |

Table 1 reveals that in Examples 1 to 13 where a compound falling within the definition of the lubricant (B) was added, the separability from rolls was better than in Comparative Examples 1 and 2 where only resins were used. In addition, the coatability with mold release agents and the printability were also good. In Examples 1 to 9, 11, 12, and 14, the sheet appearance was also good.

In Comparative Examples 3 to 7 where a material falling outside the definition of the lubricant (B) was added, the coatability with mold release agents and the printability were poor. In Comparative Examples 7 and 8, the separability from rolls was unsatisfactory. Erucamide used in Comparative Examples 3 to 5 and behenamide used in Comparative Example 7 are conventionally known lubricants. The compound used in Comparative Example 6 is a tetraester compound. The compound used in Comparative Example 8 is a material known as a plasticizer.

### (Example 15)

A vapor-deposited layer containing aluminum was formed on the sheet produced in Example 9, and the adhesion of the vapor-deposited layer was evaluated. The result is shown in Table 2.

### (Comparative Example 9)

A vapor-deposited layer containing aluminum was formed on the sheet produced in Comparative Example 2. The evaluation result is shown in Table 2.

### (Comparative Example 10)

A vapor-deposited layer containing aluminum was formed on the sheet produced in Comparative Example 4. The evaluation result is shown in Table 2.

**[Table 2]**

| | P3HA copolymer (A) | Lubricant (B) or another additive | | | Evaluation results |
|---|---|---|---|---|---|
| | | Type | Maximum number of carbon atoms in fatty acid | Amount (parts by weight) | Adhesion of vapor-deposited layer |
| Ex. 15 | PHBH (3) | Ethylene glycol dimontanate | 28 | 0.5 parts | Good |
| Comp. 9 | PHBH (3) | - | - | - | Average |
| Comp. 10 | PHBH (3) | Erucamide | 22 | 0.5 parts | Poor |

Table 2 reveals that in Example 15 where a compound falling within the definition of the lubricant (B) was added, the adhesion of the vapor-deposited layer was better than in Comparative Example 9 where only resins were used and Comparative Example 10 where a compound falling outside the definition of the lubricant (B) was added.

## Claims

1. A resin composition comprising a poly(3-hydroxyalkanoate) copolymer (A) and a lubricant (B), wherein
the lubricant (B) comprises at least one compound selected from the group consisting of a diester compound composed of a dihydric alcohol and two molecules of a monocarboxylic acid and a triester compound composed of a trihydric alcohol and three molecules of a monocarboxylic acid, and
the monocarboxylic acid comprises a carboxylic acid having 15 or more carbon atoms.

2. The resin composition according to claim 1, wherein the monocarboxylic acid comprises an aliphatic carboxylic acid.

3. The resin composition according to claim 1 or 2, wherein the monocarboxylic acid comprises a carboxylic acid having 25 or more carbon atoms.

4. The resin composition according to claim 1 or 2, wherein the monocarboxylic acid comprises montanic acid.

5. The resin composition according to claim 1 or 2, wherein the dihydric alcohol and the trihydric alcohol have 2 to 6 carbon atoms.

6. The resin composition according to claim 1 or 2, wherein the lubricant (B) comprises the diester compound.

7. The resin composition according to claim 1 or 2, wherein the lubricant (B) further comprises a salt of a carboxylic acid having 15 or more carbon atoms.

8. The resin composition according to claim 1 or 2, wherein an amount of the lubricant (B) is from 0.01 to 2 parts by weight per 100 parts by weight of the poly(3-hydroxyalkanoate) copolymer (A).

9. The resin composition according to claim 1 or 2, wherein the poly(3-hydroxyalkanoate) copolymer (A) is a copolymer comprising 3-hydroxybutyrate units and other hydroxyalkanoate units.

10. The resin composition according to claim 9, wherein the other hydroxyalkanoate units are 3-hydroxyhexanoate units.

11. A molded article comprising the resin composition according to claim 1 or 2.

12. The molded article according to claim 11, wherein the molded article is a film or a sheet.

13. The molded article according to claim 11, wherein the molded article is an extrusion blow-molded article or an injection blow-molded article.

14. The molded article according to claim 11, wherein the molded article has on a surface thereof a printed layer and/or a mold release agent layer.

15. The molded article according to claim 11, wherein the molded article has on a surface thereof a vapor-deposited layer comprising an inorganic material.
